# EUROPÄISCHE PATENTSCHRIFT

(11) **EP 1 457 698 B1**
(45) Veröffentlichungstag und Bekanntmachung des Hinweises auf die Patenterteilung: **28.11.2012**
(21) Anmeldenummer: 04004936.3
(22) Anmeldetag: 03.03.2004
(51) Int. Cl.: F16D 23/14

(54) **Ausrücklager**
Release bearing
Butée de débrayage

(30) Priorität: 14.03.2003 DE 10311207
(43) Veröffentlichungstag der Anmeldung: 15.09.2004
(73) Patentinhaber: Schaeffler Technologies AG & Co. KG, 91074 Herzogenaurach (DE)
(72) Erfinder: Winkelmann, Ludwig, 91056 Erlangen (DE); Dittmer, Steffen, 91074 Herzogenaurach (DE); Klöpfer, Bernhard, 91438 Windsheim (DE)

(56) Entgegenhaltungen:
- DE-A1- 4 425 753
- DE-A1- 19 622 109
- DE-U1- 9 013 580
- FR-A1- 2 883 347

## Beschreibung

### Anwendungsgebiet der Erfindung

Die vorliegende Erfindung betrifft ein Ausrücklager für eine Betätigungseinrichtung von Schalttrennkupplungen, die vorzugsweise in Fahrzeugen zwischen einer Brennkraftmaschine und einem Zahnräderwechselgetriebe angeordnet ist. Das vorzugsweise als ein Schrägschulterlager ausgebildete Ausrücklager umfasst einen umlaufenden, äußeren Lagerring sowie einen drehstarren inneren Lagerring, zwischen denen in Laufbahnen geführte und in einem Käfig eingesetzte Wälzkörper angeordnet sind. Zur Abdichtung eines Innenraums des Ausrücklagers umfasst das Ausrücklager Abdichtkappen, die an einem Lagerring befestigt, unter Einhaltung eines Ringspaltes bis an den zugehörigen weiteren Lagerring geführt sind. Jeder Lagerring ist weiterhin mit einem radial zu einer Längsachse des Ausrücklagers ausgerichteten Flansch versehen, über den das Ausrücklager auf der einen Seite mit einem axial verschiebbaren Bauteil, der Betätigungseinrichtung und gegenseitig mit einem der Schalttrennkupplung zugeordneten Federmittel zusammenwirkt.

### Hintergrund der Erfindung

Ein Ausrücklager der zuvor genannten Bauart ist beispielsweise aus der DE 197 16 218 A1 bekannt. Der kreisringförmig gestaltete Innenraum dieses Ausrücklagers ist beidseitig der Wälzkörper abgedichtet. Auf der zur Schalttrennkupplung gerichteten Seite ist dazu ein als Dichtelement wirkendes Halteelement vorgesehen. Dieses umfasst einen radialen Schenkel, der in einen kreisringförmigen Freiraum hinein ragt, welcher beidseitig von radial verlaufenden Anlaufflanschen der Lagerringe begrenzt ist. Der radiale Schenkel des Halteelementes ist unter Einhaltung eines Ringspaltes bis an den zugehörigen äußeren, umlaufenden Lagerring geführt. Auf der Gegenseite weist das bekannte Ausrücklager eine an dem drehstarren Innenring befestigte Abdichtkappe auf, deren radialer Schenkel an dem inneren Lagerring befestigt ist und deren zugehöriger zylindrischer Schenkel den umlaufenden äußeren Lagerring radial beabstandet teilweise umschließt. Die in einem definierten Abstand zum äußeren Lagerring verlaufende Dichtkappe ermöglicht keinen wirksamen Schutz vor einem Schmierstoffaustritt aus dem Inneren des Ausrücklagers bzw. Eintritt von Verunreinigungen in das Ausrücklager.

Die DE 44 25 753 A1 und DE 90 13 580 U1 zeigen ein als Schrägschulterlager ausgebildetes Ausrücklager, das über einen feststehenden Bindering, einen drehbaren Außenring und dazwischen angeordnete Wälzkörper verfügt, wobei an dem drehbaren Außenring eine Abdichtkappe angeordnet ist und ein Dichtring aus deinem elastischen Material zwischen der Abdichtkappe und dem Außenring zur Abdichtung vorgesehen ist. Die DE 196 22 109 A1 zeigt ein ähnlich aufgebautes Ausrücklager, bei dem allerdings der Außenring als feststehender Ring mit Abdichtkappe und Zwischenabdichtkappe und Außenring angeordnetem elastischen Dichtring sowie drehbarem Innenring ausgebildet ist. Eine derartige Abdichtung zwischen Dichtkappe und Lagerring ist vergleichsweise aufwendig zu montieren.

### Zusammenfassung der Erfindung

Zur Vermeidung der zuvor genannten Nachteile ist es Aufgabe der Erfindung, eine kostengünstige Maßnahme zu entwickeln, einen Schmierstoffaustritt aus dem Ausrücklager wirksam zu unterbinden.

Diese Problemstellung wird erfindungsgemäß durch die Merkmale der Ansprüche 1 und 14 gelöst.

Gemäß der Erfindung nach Anspruch 1 ist vorgesehen, die Abdichtkappe an dem umlaufenden äußeren Lagerring zu fixieren. Weiterhin schließt die Erfindung eine Dichtmasse ein, die in eine als Dichtzone ausgebildete Axialnut der Abdichtkappe flüssig eingebracht und dauerelastisch aushärtbar ist. Diese Maßnahme verhindert wirkungsvoll einen Schmierstoffaustritt aus dem Innenraum des Ausrücklagers, was sich vorteilhaft auf die Funktion und damit auf die Lebensdauer des Ausrücklagers auswirkt.

Die Wirksamkeit der Abdichtung ermöglicht, dass die in das Ausrücklager eingebrachte Schmierstoffmenge vorteilhaft reduziert werden kann, da ein durch Leckage bedingter Schmierstoffverlust nicht entsteht. Die für die Lebensdauer des Ausrücklagers erforderliche Schmierstoffmenge kann so exakt mittels Langzeitversuchen ermittelt werden und damit ein Ausfall des Ausrücklagers bedingt durch einen Schmierstoffverlust unterbunden werden. Die genau dosierbare im Vergleich zu bisherigen Ausrücklagern reduzierte Schmierstoffmenge wirkt sich weiterhin vorteilhaft auf die Erwärmung des Ausrücklagers aus und reduziert damit zusätzlich einen vorzeitigen Ausfall des Ausrücklagers.

Die Erfindung gemäß Anspruch 15 schließt ein Montageverfahren ein, mit dem die Wirksamkeit der Abdichtung optimiert werden kann. Die Montage der Abdichtkappe, d. h. das Zusammenfügen der Abdichtkappe mit dem äußeren Lagerring, in dem ein zylindrischer Schenkel der Abdichtkappe auf einen korrespondierenden zylindrischen Abschnitt des äußeren Lagerrings axial aufgeschoben wird, erfolgt nach einer erfolgten Aushärtung der elastisch bleibenden Dichtmasse. Die zur Abdichtung des sich zwischen der Abdichtkappe und dem äußeren Lagerring bildenden Dichtspaltes vorgesehene Dichtmasse wird erfindungsgemäß zunächst flüssig in eine Axialnut der Abdichtkappe eingebracht, die anschließend dauerelastisch aushärtet. Anschließend wird die Abdichtkappe axial verschoben und dabei kraft- und/oder formschlüssig auf den zylindrischen Abschnitt des äußeren, umlaufenden Lagerrings gefügt, wobei die dauerelastisch ausgehärtete Dichtmasse sich verpresst und dabei die Axialnut ausfüllt und den Dichtspalt wirksam abdichtet.

Zur Einhaltung einer Toleranz für einen Funktionsspalt, der sich zwischen der Abdichtkappe und einem mit dem Ringflansch des drehstarren Lagerrings verbundenen Befestigungselement einstellt, erfolgt die Montage der Abdichtkappe mit Hilfe eines Werkzeugs. Dabei wird der Außenring oder die Abdichtkappe gegen einen axialen Anschlag soweit gepresst, dass sich ein Funktionsspalt innerhalb einer vorgegebenen Toleranz einstellt.

Vorzugsweise sind die Bauteile, der äußere Lagerring und die Abdichtkappe in Verbindung der Axialnut so gestaltet, dass bei Einhaltung des Funktionsspaltes axial vorstehende Nocken der Abdichtkappe bis auf die Stärke eines Dichtfilms an die Stirnseite des äußeren Lagerrings herangeführt sind. Diese Maßnahme bewirkt eine geschlossene Dichtmasse im Bereich des sich zwischen der Abdichtkappe und der Stirnseite des äußeren Lagerrings sich einstellenden Dichtspaltes gewährleistet ist.

Vorteilhafte Ausgestaltungen der Erfindung gemäß Anspruch 1 sind Gegenstand der abhängigen Ansprüche.

Gemäß der Erfindung ist die Abdichtkappe an dem von der Schalttrennkupplung abgewandten Seite des äußeren umlaufenden Lagerrings angeordnet, wobei die Abdichtkappe mit einem zylindrischen Schenkel den äußeren Lagerring teilweise umschließt. Der in Richtung der Längsachse des Ausrücklagers gerichtete radiale Schenkel der Abdichtkappe begrenzt gemeinsam mit der Stirnseite des äußeren Lagerrings den Dichtspalt, wobei im Bereich des Dichtspaltes die Dichtkappe eine Axialnut aufweist.

Zur formschlüssigen Befestigung der Abdichtkappe an dem äußeren Lagerring ist der zylindrische Schenkel der Abdichtkappe mit einem Endabschnitt radial nach innen gebördelt und dabei der Außenkontur des äußeren Lagerrings angepasst. Zusätzlich oder alternativ bietet sich eine kraftschlüssige Befestigung der Abdichtkappe an, bei der diese mit dem zylindrischen Schenkel auf den korrespondierenden zylindrischen Abschnitt des äußeren Lagerrings gepresst ist.

Vorteilhaft ist die erfindungsgemäße Abdichtkappe spanlos, beispielsweise durch ein Tiefziehverfahren hergestellt. Im Bereich der Axialnut übereinstimmend mit der Stirnseite des Lagerrings weist die Abdichtkappe axial in Richtung des Lagerrings ausgerichtete, durchgestellte Nocken auf. Die bevorzugt symmetrisch umfangsverteilt angeordneten axial vorstehenden Nocken vermeiden im Bereich der Axialnut eine flächige Abstützung der Abdichtkappe. Diese Maßnahme vergrößert vorteilhaft das in die Axialnut einzubringende Volumen der Dichtmasse, da die Abdichtkappe ausschließlich über axial vorstehende Nocken punktförmig an der Stirnseite des Lagerrings, vorzugsweise mittelbar, d. h. bis auf eine Dichtfilmstärke abgestützt ist.

Die Dichtwirkung verbessernd, ist gemäß der Erfindung vorgesehen, dass die Dichtmasse die Nocken der Abdichtkappe im Bereich der Axialnut umschließen und sich im eingebauten Zustand zwischen der Stirnseite des Lagerrings und dem freien Ende der Nocken ein Dichtfilm einstellt, d. h. die Dichtmasse bis auf ein Maß von ≦ 0,3mm zusammengepresst ist. Die vor der Montage der Abdichtkappe bereits dauerelastisch ausgehärtete Dichtmasse ermöglicht weiterhin, dass diese im eingebauten Zustand zumindest begrenzt ein radial von dem äußeren Lagerring und dem zylindrischen Abschnitt der Dichtkappe begrenztes Spaltmaß ausfüllen. Diese Möglichkeit stellt einen weiteren vorteilhaften Schritt dar, die Abdichtqualität zu optimieren.

Die in die Axialnut der Abdichtkappe eingebrachte Dichtmasse ist so bemessen, dass diese einen Überschuss bzw. einen Überstand zu den radial verlaufenden Planflächen im Bereich des axialen Dichtspaltes bzw. der Dichtzone bildet. Während der Montage ermöglicht dieser Überschuss, dass sich beispielsweise ein sich einstellendes Spaltmaß zwischen dem äußeren Lagerring und dem zylindrischen Abschnitt der Dichtkappe ausgefüllt wird. Gleichzeitig stellt sich eine vergrößerte Überdeckungszone zwischen der Axialnut und dem freien Ende des äußeren Lagerrings ein, was die Abdichtqualität der erfindungsgemäßen Abdichtung verbessert. Die Erfindung schließt weiterhin als zusätzliche Maßnahme eine radiale Ziehstufe der Abdichtkappe im Bereich des zylindrischen Schenkels ein. Diese vorteilhaft während des Ziehprozess angeformte Ziehstufe kann so dimensioniert werden, dass der zylindrische Schenkel der Abdichtkappe spielfrei bzw. mit einem Übermaß, zur Erzielung einer Presspassung, auf den äußeren, umlaufenden Lagerring aufgepresst werden kann.

Außerdem schließt die Erfindung eine Beschichtung an der Innenseite des zylindrischen Schenkels der Abdichtkappe ein. Vorteilhaft ist diese so gestaltet, dass sich bei einem Zusammenbau der Abdichtkappe mit dem äußeren Lagerring die Beschichtung zumindest bereichsweise ablöst und in der Axialnut der Abdichtkappe verpresst sammelt. Diese Maßnahme hat den Vorteil, dass alle Ausnehmungen bzw. Hohlräume im Bereich des Spaltmaßes zwischen dem äußeren Lagerring des Ausrücklagers und dem zylindrischen Schenkel der Dichtkappe zumindest im Endbereich durch die Beschichtung aufgefüllt sind und damit die Abdichtung weiter verbessern. Die Beschichtung bewirkt einen Ausgleich einer Formtoleranz und/oder einer Lagetoleranz zwischen den Bauteilen, dem äußeren Lagerring und der Dichtkappe.

Als geeignete Beschichtung eignet sich insbesondere eine galvanisch aufgebrachte FeZn-; FeZnNi-Beschichtung, die kostengünstig in einem Trommelverfahren auf die Innenseite des zylindrischen Schenkels der Abdichtkappe aufgebracht werden kann. Ein weiterer Vorteil dieser Beschichtung besteht darin, dass diese die Korrosionsbeständigkeit verbessert. Alternativ eignet sich eine hochtemperaturbeständige Kunststoffbeschichtung bzw. das Auftragen von Klebstoffen oder Metalllegierungen, die beispielsweise mittels eines Spritzverfahrens bzw. in einem Lichtbogenspritzverfahren bereichsweise an die Innenwandung des zylindrischen Schenkels der Abdichtkappe aufgebracht werden kann.

### Kurze Beschreibung der Zeichnungen

Ausführungsbeispiele der Erfindung sind in den Figuren dargestellt, die nachfolgend beschrieben werden. Es zeigen:
- Figur 1: in einem Halbschnitt ein Ausrücklager, versehen mit einer Abdichtung;
- Figur 2: in einer vergrößerten Darstellung die Einzelheit "X", gemäß Figur 1;
- Figur 3: ein weitestgehend dem Ausrücklager gemäß Figur 1 vergleichbares Ausrücklager mit einer abweichend gestalteten Abdichtung;
- Figur 4: in einer vergrößerten Abbildung die Einzelheit "Y", gemäß Figur 3;
- Figur 5: in einer Einzelteilzeichnung eine Variante der erfindungsgemäßen Abdichtkappe;
- Figur 6: eine weitere Variante der erfindungsgemäßen Abdichtkappe in einer Einzelteilzeichnung;
- Figur 7: ein Ausrücklager in Verbindung mit einem Montagewerkzeug;
- Figur 8: die Einzelheit "Z" der Figur 7, in einer vergrößerten Darstellung.

### Detaillierte Beschreibung der Zeichnungen

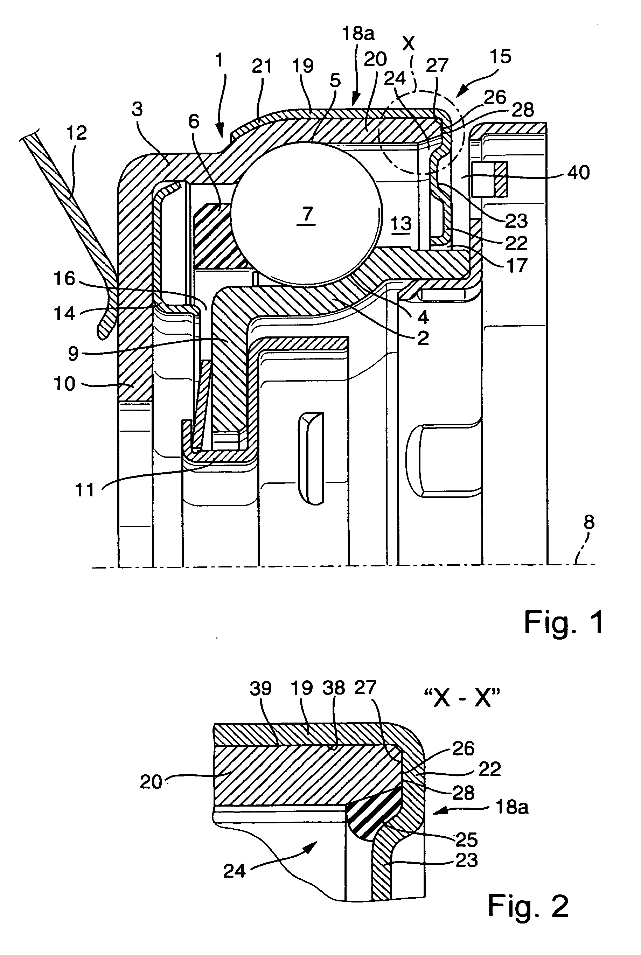

Das in Figur 1 im Halbschnitt abgebildete Ausrücklager 1 ist als ein Schrägschulterlager aufgebaut, versehen mit einem drehstarr angeordneten inneren Lagerring 2 und einem umlaufenden, äußeren Lagerring 3. Zwischen den Lagerringen 2, 3 sind an Laufbahnen 4, 5 der Lagerringe 2, 3 geführte und in einem Käfig 6 eingesetzte Wälzkörper 7 angeordnet. Die Lagerringe 2, 3 sind übereinstimmend mit jeweils einem radial nach innen in Richtung einer Längsachse 8 des Ausrücklagers 1 ausgerichteten Flansch 9, 10 verbunden. Der Flansch 9 des inneren Lagerrings ist dabei drehstarr über ein Halteelement 11 mit einer axial verschiebbaren in Figur 1 nicht abgebildeten Betätigungseinrichtung verbunden. An dem parallel zu dem Flansch 9 angeordneten Flansch 10 des äußeren Lagerrings 3 stützt sich im eingebauten Zustand eine Tellerfeder 12 der Schalttrennkupplung kraftschlüssig ab. Zur Abdichtung eines Innenraums 13 des Ausrücklagers 1 sind beidseitig der Wälzkörper 7 Abdichtungen 14, 15 vorgesehen, die übereinstimmend drehstarr an dem äußeren Lagerring 3 befestigt sind und unter Einhaltung eines Ringspaltes 16, 17 bis an den inneren Lagerring 2 geführt sind. Als Abdichtung 15 ist eine Abdichtkappe 18a vorgesehen, ausgebildet als ein spanlos hergestelltes Blechteil, dessen zylindrischer Schenkel 19 einen ebenfalls zylindrischen Abschnitt 20 des äußeren Lagerrings 3 umschließt und an diesem mit einer endseitigen Bördelung 21 lagefixiert ist. Die Abdichtkappe 18a bildet weiterhin einen radial nach innen gerichteten Schenkel 22, der bis auf einen Ringspalt 17 an den inneren Lagerring 2 geführt ist. Der radial beabstandet zur äußeren zylindrischen Kontur der Abdichtkappe ist der Schenkel 22 mit einer umlaufenden Sicke bzw. symmetrisch umfangsverteilt angeordneten Durchsetzungen 23 versehen. In eine die radial von den Durchsetzungen 23 und einer Innenkontur des zylindrischen Abschnitts des äußeren Lagerrings 3 radial begrenzte Dichtzone 24, ist eine Dichtmasse 25 eingebracht. Dazu ist eine Dichtmasse 25 vorgesehen, die flüssig eingebracht, dauerelastisch ausgehärtet, wie beispielsweise ein hochtemperaturbeständiger Silikon-Kautschuk, der gleichzeitig dauerhaft eine wirksame Abdichtung des Dichtspaltes 26 bewirkt, der axial von dem Schenkel 22 der Abdichtkappe 18a und einer Stirnseite 27 des äußeren Lagerrings 3 begrenzt ist.

Die Figur 2 verdeutlicht die Gestaltung der Dichtzone 24, die mit der Dichtmasse 25 ausgefüllt den Dichtspalt 26 wirksam abdichtet. Gemäß der Erfindung wird vor der Montage der Abdichtkappe 18a die Dichtmasse 25 an dem radialen Schenkel 22 der Abdichtkappe 18a aufgetragen und die Montage erfolgt nachdem die Dichtmasse 25 dauerelastisch ausgehärtet ist. Bei der Montage wird die Dichtmasse 25 elastisch verformt und füllt dabei die Dichtzone 25 vollständig aus und bildet dabei einen Dichtfilm 28 zwischen der Stirnseite 27 des Lagerrings 3 und dem radialen Schenkel der Abdichtkappe 18a. Die Figur 2 zeigt weiterhin eine spielfrei an dem Lagerring 3 anliegende Abdichtkappe 18a. Dazu ist die spanlos hergestellte Abdichtkappe 18a mit dem zylindrischen Schenkel 19 auf die Außenkontur des zylindrischen Abschnitts 20 des äußeren Lagerrings 3 gefügt. Zur Vermeidung eines Spaltmaßes 39 bietet es sich an, den zylindrischen Schenkel 19 mit Untermaß auf den zylindrischen Abschnitt 20 zu pressen.

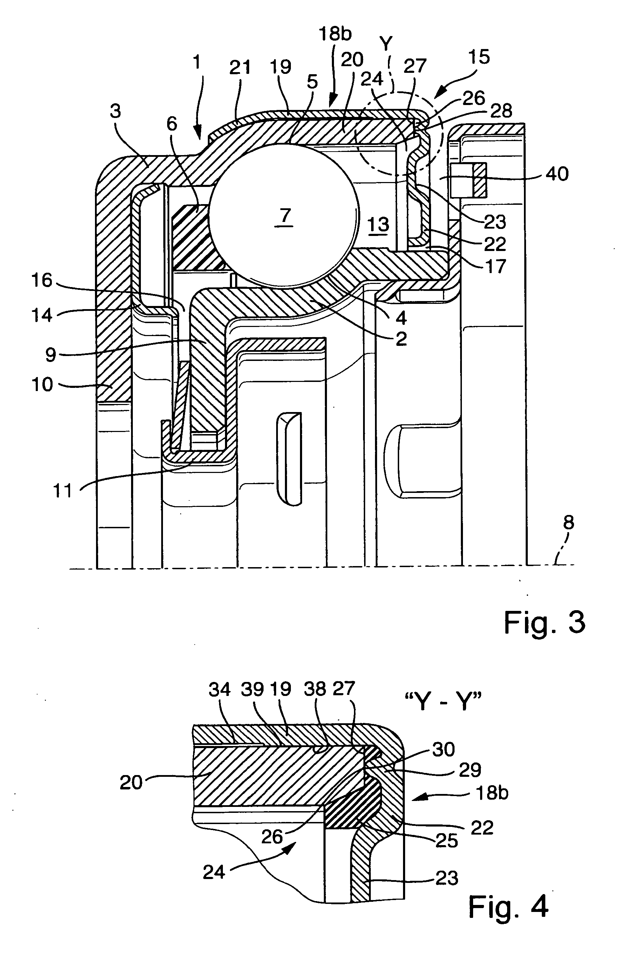

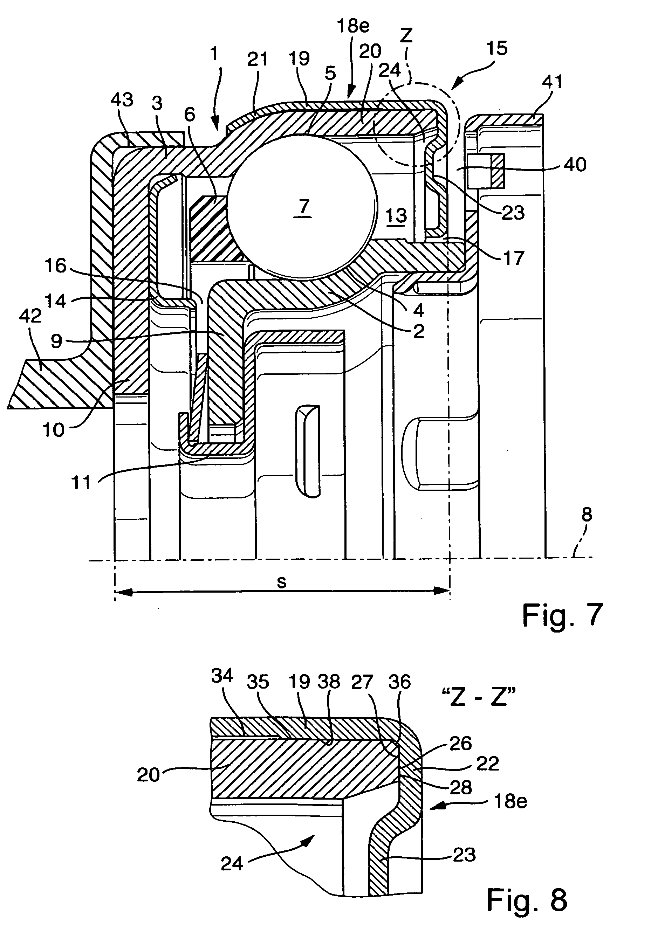

Die Figuren 3 und 7 zeigen das Ausrücklager 1 in einem mit Figur 1 übereinstimmenden Aufbau. Die Unterscheidungsmerkmale beziehen sich ausschließlich auf die unterschiedlich gestalteten Abdichtkappen. Alle mit der Figur 1 übereinstimmenden, Bauteile der Figuren 3 und 7 sind mit gleichen Bezugsziffern versehen. Die Figurenbeschreibungen zu den Figuren 3 und 7 beziehen sich daher ausschließlich auf die abweichenden Bauteile.

Das Ausrücklager 1 gemäß Figur 3 umfasst die Abdichtkappe 18b und bildet im Bereich des radial ausgerichteten Schenkels 22 axial ausgerichtete Nocken 29, die sich an der Stirnseite 27 punktartig abstützen. Diese örtliche Durchsetzungen bildende Nocken 29 vergrößern die Kontaktfläche der Dichtzone 24. Vorteilhaft werden die einzelnen radial zur Außenkontur der Abdichtkappe 18b angeordneten Nocken 29 von der Dichtmasse 25 umschlossen, wodurch sich die Dichtzone 24 über die gesamte Stirnseite 27 des Lagerrings 3 erstreckt, was zu einer verbesserten Abdichtung und zur Gewährleistung des Funktionsspaltes führt.

Wie in der vergrößerten Darstellung der Einzelheit "Y" gemäß Figur 4 zu ersehen, sind die axial ausgerichteten Nocken 29 der Abdichtkappe 18b radial versetzt zur Außenkontur des Lagerrings 3 angeordnet. Diese Maßnahme ermöglicht, dass die Nocken 29 von der Dichtmasse 25 vollständig umschlossen sind, wodurch sich die Dichtzone 24 vergrößert. Die Ausbildung der Nocken 29 schließt weiterhin ein, dass diese bis auf einen Dichtfilm 30 sich an der Stirnseite 27 abstützen. Die Abdichtkappe 18b gemäß Figur 4 zeigt eine Ziehstufe 34, die bei dem Herstellprozess, vorzugsweise einem Tiefziehen der Abdichtkappe 18a angeformt wird. Die Ziehstufe 34 ermöglicht eine eng tolerierte spielfreie Anordnung des zylindrischen Schenkels 19 auf dem zylindrischen Abschnitt 20 des Lagerrings 3 und damit ein gewünschtes enges Spaltmaß 39 zwischen dem Lagerring 3 und der Abdichtkappe 18b. Die kurze axiale Fügelänge erleichtert den Montageprozess durch die Vorzentrierung und vermindert die Fügekräfte.

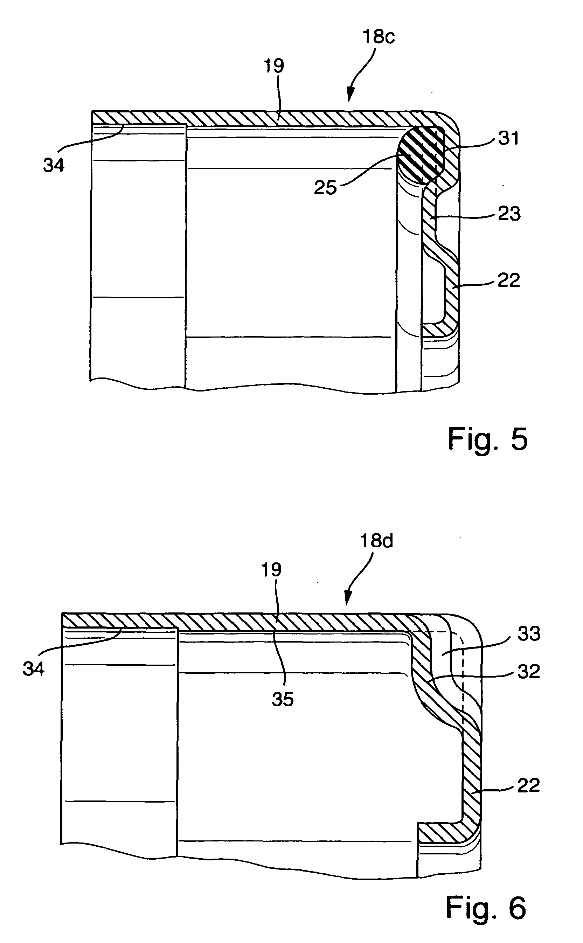

Die Figur 5 zeigt die Abdichtkappe 18c als Einzelteil in einem Halbschnitt. Im Bereich der Dichtzone 24 bildet die Abdichtkappe 18c eine nach außen gerichtete Axialnut 31, wobei diese partiell an dem radial verlaufenden Schenkel 22 angeordnet ist. Zur Verdeutlichung der Abdichtung ist die Dichtmasse 25 dargestellt, die das gesamte Volumen der Axialnut 31 ausfüllt. Die Dichtmasse 25 ist so bemessen, dass sich ein Überstand bzw. ein Überschuss bildet, der bei der Montage der Abdichtkappe 18c sich elastisch insbesondere in Richtung der Durchsetzungen 23 radial nach innen verlagert und damit die Fläche der Dichtzone 24 vergrößert.

Die in Figur 6 als Einzelteil abgebildete Abdichtkappe 18d, ist an dem Schenkel 22 mit axial nach innen vorstehende Stegen 32 versehen, an denen die Abdeckkappe 18d im eingebauten Zustand sich stirnseitig an dem Lagerring 3 abstützt. Die umfangsverteilt angeordneten Stege 32 begrenzen Axialnuten 33, die zur Aufnahme der Dichtmasse 25 bestimmt sind. Die eingebrachte Dichtmasse 25 ist dabei so bemessen, dass diese sich auch stirnseitig auf die Stege 32 erstreckt, die beim Fügen mit dem Außenring bis auf die Stärke eines Dichtfilms an die Stirnseite 27 des Lagerrings 3 herangeführt werden können und somit unter Einhaltung enger Fertigungstoleranzen den Funktionsspalt 40 ermöglichen.

Das Ausrücklager 1 ist gemäß Figur 7 mit der Abdichtkappe 18e versehen, deren Schenkel 22 übereinstimmend mit der in den Figuren 1 und 2 abgebildeten Abdichtkappe 18a übereinstimmen. Als zusätzliche Maßnahme, die Abdichtung zwischen dem äußeren Lagerring 3 und der Abdichtkappe 18e zu verbessern, ist der zylindrische Schenkel 19 der Abdichtkappe 18d innenseitig in dem von der Ziehstufe 34 axial versetzten Bereich beschichtet. Die dabei aufgebrachte Beschichtung 35 ist so gestaltet, dass diese beim Zusammenfügen der Abdichtkappe 18e auf den äußeren Lagerring 3 zumindest teilweise abgeschabt wird und sich in einer Ringzone 36 sammelt, die außenseitig von dem zylindrischen Schenkel 19 und dem radialen Schenkel 22 der Abdichtkappe 18d und innenseitig von einer Fase 37 des zylindrischen Abschnitts 20 vom äußeren Lagerring 3 begrenzt ist. Die durch Beschichtungsbestandteite ausgefüllte Ringzone 36 optimiert die Abdichtung, die gleichzeitig als eine Verlängerung der Dichtzone 24 zu bezeichnen ist.

Zur Erzielung eines definierten Funktionsspaltes 40, der sich im eingebauten Zustand des Ausrücklagers 1 zwischen dem radialen Schenkel 22 der Abdichtkappe 18e und einem drehstarren Befestigungselement 41 der Betätigungseinrichtung einstellt, wird vorzugsweise ein Montagewerkzeug 42 benutzt. Dazu wird der Lagerring 3 mit dem Flansch 10 in eine Aufnahme 43 des Montagewerkzeuges 42 eingesetzt, bevor die Abdichtkappe 18e axial auf den zylindrischen Abschnitt 20 des äußeren Lagerrings 3 aufgeschoben wird, wobei sich gleichzeitig die dauerelastisch ausgehärtete Dichtmasse 25 verformt und dabei die Dichtzone 24 ausfüllt. Durch die anschließende Bördelung 21 des zylindrischen Schenkels 19 wird die Abdichtkappe 18e formschlüssig an dem Lagerring 3 in einer Position befestigt, die das Maß für den Funktionsspalt 40 berücksichtigt.

### Bezugszahlen

- 1: Ausrücklager
- 2: Lagerring (innen)
- 3: Lagerring (außen)
- 4: Laufbahn
- 5: Laufbahn
- 6: Käfig
- 7: Wälzkorper
- 8: Längsachse
- 9: Flansch
- 10: Flansch
- 11: Halteelement
- 12: Tellerfeder
- 13: Innenraum
- 14: Abdichtung
- 15: Abdichtung
- 16: Ringspalt
- 17: Ringspalt
- 18a: Abdichtkappe
- 18b: Abdichtkappe
- 18c: Abdichtkappe
- 18d: Abdichtkappe
- 18e: Abdichtkappe
- 19: Schenkel (zylindrisch)
- 20: Abschnitt
- 21: Bördelung
- 22: Schenkel (radial)
- 23: Durchsetzung
- 24: Dichtzone
- 25: Dichtmasse
- 26: Dichtspalt
- 27: Stirnseite
- 28: Dichtfilm
- 29: Nocken
- 30: Dichtfilm
- 31: Axialnut
- 32: Steg
- 33: Axialnut
- 34: Ziehstufe
- 35: Beschichtung
- 36: Ringzone
- 37: Fase
- 38: Innenseite
- 39: Spaltmaß
- 40: Funktionsspalt
- 41: Befestigungselement
- 42: Montagewerkzeug
- 43: Aufnahme

## Patentansprüche

1. Ausrücklager für eine Betätigungseinrichtung von Schalttrennkupplungen, die in Fahrzeugen zwischen einer Brennkraftmaschine und einem Zahnräderwechselgetriebe eingesetzt ist, wobei das als ein Schrägschulterlager ausgebildete Ausrücklager (1) einen umlaufenden, äußeren Lagerring (3) und einen drehstarren inneren Lagerring (2) umfasst, zwischen denen in Laufbahnen (4, 5) geführte und in einem Käfig (6) eingesetzte Wälzkörper (7) angeordnet sind, und zur Abdichtung eines Innenraums (13) des Ausrücklagers (1), Abdichtkappen (18a bis 18e) vorgesehen sind, die an einem Lagerring (2, 3) befestigt, unter Einhaltung eines Ringspaltes (16, 17) bis an den zugehörigen weiteren Lagerring (2, 3) geführt sind und jeder Lagerring (2, 3) einen rechtwinklig zu einer Längsachse (8) des Ausrücklagers (1) ausgerichteten Flansch (9, 10) aufweist, über den das Ausrücklager (1) an einem axial verschiebbaren Bauteil der Betätigungseinrichtung sowie einem Federmittel, insbesondere einer Tellerfeder (12) der Schalttrennkupplung abgestützt ist, wobei zur Abdichtung eines Dichtspaltes (26) zwischen dem äußeren Lagerring (3) und der an dem äußeren Lagerring (3) drehfixierten Abdichtkappe (18a bis 18e) eine flüssig eingebrachte, dauerelastisch aushärtbare Dichtmasse (25) vorgesehen ist, die eine Dichtzone (24) der Abdichtkappe (18a bis 18e) ausfüllt, und **dadurch gekennzeichnet, dass** die Abdichtkappe (18a - 18e) einen zylindrischen Schenkel (19) aufweist, dessen Innenseite eine radiale Ziehstufe (34) bildet, die einen spielfreien Einbau des zylindrischen Schenkels (19) an dem zylindrischen Abschnitt (20) der Abdichtkappe (18a - 18e) im eingebauten Zustand ermöglicht.

2. Ausrücklager nach Anspruch 1, dessen Abdichtkappe (18c, 18d) an der von der Schaltrennkupplung abgewandten Seite des äußeren Lagerrings (3) angeordnet, mit dem zylindrischen Schenkel (19) den Lagerring (3) teilweise umschließt und deren in Richtung der Längsachse (8) ausgerichteter radialer Schenkel (22) eine Axialnut (31, 33) aufweist, die gemeinsam mit einer Stirnseite (27) des Lagerrings (3) den Dichtspalt (26) axial begrenzt.

3. Ausrücklager nach Anspruch 1, wobei die spanlos, vorzugsweise durch ein Tiefziehen hergestellte Abdichtkappe (18a, 18b, 18e) mit einer an einem Endabschnitt des zylindrischen Schenkels (19) vorgesehenen Bördelung (21) formschlüssig an dem Lagerring (3) befestigt ist.

4. Ausrücklager nach Anspruch 2, dessen Abdichtkappe (18b) an dem radialen Schenkel (22) in einer mit der Stirnseite (27) des Lagerrings (3) übereinstimmenden Lage symmetrisch umfangsverteilt angeordnete, axial in Richtung des Lagerrings (3) durchgestellte Nocken (29) aufweist.

5. Ausrücklager nach Anspruch 1, dessen Abdichtkappe (18c) partiell eine symmetrisch umfangsverteilt angeordnete, dem Lagerring (3) entgegengesetzt ausgerichtete Axialnut (31) aufweist.

6. Ausrücklager nach Anspruch 4, bei dem die axial ausgerichteten, zu einer Außenkontur der Abdichtkappe (18b) radial beabstandete Nocken (29) eine flächige Abstützung der Abdichtkappe (18b) an der Stirnseite (27) des Lagerrings (3) vermeiden.

7. Ausrücklager nach Anspruch 4, wobei die Nocken (29) in einer Einbaulage der Abdichtkappe (18b)von der Dichtmasse (25) umschlossen und bis auf eine Stärke eines Dichtfilms (30) an der Stirnseite (27) des äußeren Lagerrings (3) abgestützt sind.

8. Ausrücklager nach Anspruch 1, wobei als Dichtmasse (25) ein hochtemperaturbeständiger Silikon-Kautschuk vorgesehen ist.

9. Ausrücklager nach Anspruch 1, wobei die eingesetzte Dichtmasse (25) so bemessen ist, dass diese einen Überschuss bzw. einen Überstand zu den insbesondere radial verlaufenden Planflächen zwischen dem Lagerring (3) und der Abdichtkappe (18a bis 18e) im Bereich des Dichtspaltes (26) bildet.

10. Ausrücklager nach Anspruch 1, bei dem das Dichtmittel, die dauerelastische Dichtmasse (25), sich zumindest begrenzt bis in ein Spaltmaß (39) erstreckt, das radial von dem äußeren Lagerring (3) und dem zylindrischen Schenkel (19) der Dichtkappe (18a bis 18e) begrenzt ist.

11. Ausrücklager nach Anspruch 1, dessen Abdichtkappe (18e) an der Innenseite des zylindrischen Schenkels (19) eine Beschichtung (35) aufweist, die sich bei einem Zusammenbau der Abdichtkappe (18e) mit dem äußeren Lagerring (3) zumindest bereichsweise ablöst und die sich in einer von der Abdichtkappe (18e) und dem Lagerring (3) begrenzten Ringzone (36) sammelt.

12. Ausrücklager nach Anspruch 11, bei dem der zylindrische Schenkel (19) innenseitig eine galvanische Beschichtung (35) aufweist, wie beispielsweise FeZn oder FeZnNi.

13. Ausrücklager nach Anspruch 11, bei dem die Abdichtkappe (18e) an der Innenseite des zylindrischen Schenkels (19) eine hochtemperaturbeständige Beschichtung (35) aus Kunststoff einschließt.

14. Verfahren zur Abdichtung eines als ein Schrägschulterlager ausgebildeten Ausrücklagers (1), umfassend einen umlaufenden äußeren Lagerring (3) sowie einen drehstarren inneren Lagerring (2), zwischen denen Wälzkörper (7) angeordnet sind und zur Abdichtung eines Innenraums (13), das Ausrücklager (1) mit Abdichtkappen (18a bis 18e) versehen ist, die an einem Lagerring (2, 3) befestigt, unter Einhaltung eines Ringspaltes (16, 17) bis an dem zugehörigen weiteren Lagerring (2, 3) geführt sind, wobei zur Abdichtung eines Dichtspaltes (26) zwischen dem äußeren Lagerring (3) und der an dem Lagerring (3) drehfixierten Abdichtkappe (18a bis 18e) eine flüssig in die Abdichtkappe (18a bis 18e) eingebrachte Dichtmasse (25) vorgesehen ist, wobei die vor der Montage dauerelastisch aushärtbare Dichtmasse (25) sich bei der Montage verpresst, und wobei die Montage der Abdichtkappe (18a bis 18e) so erfolgt, dass sich ein Dichtfilm (28, 30) zwischen axial vorstehenden Nocken (29) oder Stegen (32) eines radialen Schenkels (22) der Abdichtkappe (18b, 18d) und der Stirnseite (27) des Lagerrings (3) einstellt.

15. Verfahren nach Anspruch 15, wobei die Montage einen Funktionsspalt (40) zwischen der Abdichtkappe (18a bis 18e) und einem mit dem drehstarren Lagerring (2) verbundenen Befestigungselement (41) berücksichtigt und dazu die Abdichtkappe (18a bis 18e) mittels eines Montagewerkzeugs (42) auf Anschlag montierbar ist.

## Claims

1. Release bearing for an actuating device of disconnectable clutches used in vehicles between an internal combustion engine and a speed-change gearbox, wherein the release bearing (1) which is in the form of an angular contact bearing has an encircling outer bearing ring (3) and a rotationally fixed inner bearing ring (2), between which are arranged rolling bodies (7) which are guided in raceways (4, 5) and which are positioned in a cage (6), and in order to seal off an interior space (13) of the release bearing (1) there are provided sealing caps (18a to 18e) which are fastened to a bearing ring (2, 3) and guided so as to maintain an annular gap (16, 17) to the associated further bearing ring (2, 3), and each bearing ring (2, 3) has a flange (9, 10) oriented at right angles to a longitudinal axis (8) of the release bearing (1), by means of which flange the release bearing (1) is supported on an axially displaceable component of the actuating device and on a spring means, in particular a plate spring (12) of the disconnectable clutch, wherein in order to seal off a sealing gap (26) between the outer bearing ring (3) and the sealing cap (18a to 18e) rotationally fixed to the outer bearing ring (3), there is provided a sealing compound (25) which is introduced in a liquid state and which can harden into a permanently elastic state and which fills out a sealing zone (24) of the sealing cap (18a to 18e), and **characterized in that** the sealing cap (18a - 18e) has a cylindrical leg (19) whose inner side forms a radial drawing step (34) which permits play-free installation of the cylindrical leg (19) on the cylindrical portion (20) of the sealing cap (18a - 18e) in the installed state.

2. Release bearing according to Claim 1, whose sealing cap (18c, 18d) is arranged on that side of the outer bearing ring (3) which faces away from the disconnectable clutch, partially surrounds the bearing ring (3) by means of the cylindrical leg (19), and whose radial leg (22) oriented in the direction of the longitudinal axis (8) has an axial groove (31, 33) which, together with a face side (27) of the bearing ring (3), axially delimits the sealing gap (26).

3. Release bearing according to Claim 1, wherein the sealing cap (18a, 18b, 18e), which is produced preferably by deep drawing, is fastened to the bearing ring (3) in a positively locking manner by means of a flanged portion (21) which is provided on an end portion of the cylindrical leg (19).

4. Release bearing according to Claim 2, whose sealing cap (18b) has, on the radial leg (22) and in a position corresponding to the face side (27) of the bearing ring (3), symmetrically circumferentially distributed cams (29) which are pushed through axially in the direction of the bearing ring (3).

5. Release bearing according to Claim 1, whose sealing cap (18c) partially has a symmetrically circumferentially distributed axial groove (31) oriented oppositely to the bearing ring (3).

6. Release bearing according to Claim 4, in which the axially oriented cams (29) which are spaced apart radially from an outer contour of the sealing cap (18b) prevent areal support of the sealing cap (18b) on the face side (27) of the bearing ring (3).

7. Release bearing according to Claim 4, wherein, in an installed position of the sealing cap (18b), the cams (29) are surrounded by the sealing compound (25) and are supported, via the thickness of a sealing film (30), on the face side (27) of the outer bearing ring (3).

8. Release bearing according to Claim 1, wherein a high-temperature-resistant silicone rubber is provided as a sealing compound (25).

9. Release bearing according to Claim 1, wherein the sealing compound (25) which is used is dimensioned so as to form a surplus or an excess length with respect to the in particular radially running planar surfaces between the bearing ring (3) and the sealing cap (18a to 18e) in the region of the sealing gap (26).

10. Release bearing according to Claim 1, in which the sealing means, the permanently elastic sealing compound (25), extends at least to a limited extent into a gap (39) which is delimited radially by the outer bearing ring (3) and the cylindrical leg (19) of the sealing cap (18a to 18e).

11. Release bearing according to Claim 1, whose sealing cap (18e) has, on the inner side of the cylindrical leg (19), a coating (35) which, during the assembly of the sealing cap (18e) with the outer bearing ring (3), is removed at least in regions and collects in an annular zone (36) delimited by the sealing cap (18e) and the bearing ring (3).

12. Release bearing according to Claim 11, in which the cylindrical leg (19) has, on the inner side, a galvanic coating (35) such as for example FeZn or FeZnNi.

13. Release bearing according to Claim 11, in which the sealing cap (18e) includes, on the inner side of the cylindrical leg (19), a high-temperature-resistant coating (35) composed of plastic.

14. Method for sealing a release bearing (1) which is in the form of an angular contact bearing and which comprises an encircling outer bearing ring (3) and a rotationally fixed inner bearing ring (2), between which are arranged rolling bodies (7), and in order to seal off an interior space (13), the release bearing (1) is provided with sealing caps (18a to 18e) which are fastened to a bearing ring (2, 3) and guided so as to maintain an annular gap (16, 17) to the associated further bearing ring (2, 3), wherein in order to seal off a sealing gap (26) between the outer bearing ring (3) and the sealing cap (18a to 18e) which is rotationally fixed to the bearing ring (3), a sealing compound (25) is provided which is introduced in a liquid state into the sealing cap (18a to 18e), wherein the sealing compound (25) which can hardened into a permanently elastic state before the mounting process is compressed during the mounting process, and wherein the mounting of the sealing cap (18a to 18e) takes place such that a sealing film (28, 30) is formed between axially projecting cams (29) or webs (32) of a radial leg (22) of the sealing cap (18b, 18d) and the face side (27) of the bearing ring (3).

15. Method according to Claim 15, wherein the mounting allows for a functional gap (40) between the sealing cap (18a to 18e) and a fastening element (41) connected to the rotationally fixed bearing ring (2), and for this purpose, the sealing cap (18a to 18e) can be mounted, so as to abut against a stop, by means of a mounting tool (42).

## Revendications

1. Butée de débrayage pour un dispositif d'actionnement d'embrayages de changement de vitesses qui est placée dans des véhicules entre un moteur à combustion interne et une boîte de vitesses à engrenages, la butée de débrayage (1) réalisée sous forme de palier à épaulement oblique comportant une bague de palier (3) externe périphérique et une bague de palier (2) interne bloquée en rotation entre lesquelles sont disposés des corps de roulement (7) guidés dans des chemins de roulement (4, 5) et insérés dans une cage (6), et des capuchons d'étanchéité (18a à 18e) étant prévus pour fermer hermétiquement un espace interne (13) de la butée de débrayage (1), lesquels capuchons d'étanchéité sont, de manière fixée à une bague de palier (2, 3), guidés jusqu'à l'autre bague de palier (2, 3) associée en maintenant un interstice annulaire (16, 17), et chaque bague de palier (2, 3) comprenant une bride (9, 10) orientée perpendiculairement à un axe longitudinal (8) de la butée de débrayage (1), par l'intermédiaire de laquelle bride la butée de débrayage (1) s'appuie contre une partie structurale axialement déplaçable du dispositif d'actionnement ainsi que contre un moyen formant ressort, en particulier un ressort Belleville (12) de l'embrayage de changement de vitesses, un produit d'étanchéité (25) durcissable à élasticité permanente introduit sous forme liquide étant prévu pour fermer hermétiquement un interstice d'étanchéité (26) entre la bague de palier (3) externe et le capuchon d'étanchéité (18a à 18e) fixé en rotation à la bague de palier (3) externe, lequel produit d'étanchéité remplit une zone d'étanchéité (24) du capuchon d'étanchéité (18 à 18e) et **caractérisée en ce que** le capuchon d'étanchéité (18a - 18e) comprend une branche cylindrique (19) dont le côté intérieur forme un emboutissage radial (34) qui permet un montage sans jeu de la branche cylindrique (19) sur la section cylindrique (20) du capuchon d'étanchéité (18a - 18e) dans l'état monté.

2. Butée de débrayage selon la revendication 1, dont le capuchon d'étanchéité (18c, 18d) est disposé sur le côté de la bague de palier (3) externe qui est opposé à l'embrayage de changement de vitesses, entoure partiellement la bague de palier (3) par l'intermédiaire de la branche cylindrique (19) et dont la branche radiale (22) orientée dans la direction de l'axe longitudinal (8) comprend une rainure axiale (31, 33) qui, conjointement avec un côté frontal (27) de la bague de palier (3), limite axialement l'interstice d'étanchéité (26).

3. Butée de débrayage selon la revendication 1, dans laquelle le capuchon d'étanchéité (18a, 18b, 18e) fabriqué sans enlèvement de copeaux, de préférence par emboutissage profond, est fixé à la bague de palier (3) par engagement par complémentarité de formes par l'intermédiaire d'un bord rabattu (21) prévu sur une section d'extrémité de la branche cylindrique (19).

4. Butée de débrayage selon la revendication 2, dont le capuchon d'étanchéité (18b) comprend des ergots (29) traversant axialement en direction de la bague de palier (3) disposés sur la branche radiale (22) de manière répartie symétriquement sur la périphérie dans une position coïncidant avec le côté frontal (27) de la bague de palier (3).

5. Butée de débrayage selon la revendication 1, dont le capuchon d'étanchéité (18c) comprend partiellement une rainure axiale (31) orientée de manière opposée à la bague de palier (3) et disposée de manière répartie symétriquement sur la périphérie.

6. Butée de débrayage selon la revendication 4, dans laquelle les ergots (29) orientés axialement et espacés radialement par rapport à un contour externe du capuchon d'étanchéité (18b) empêchent un appui plan du capuchon d'étanchéité (18b) contre le côté frontal (27) de la bague de palier (3).

7. Butée de débrayage selon la revendication 4, dans laquelle les ergots (29) sont entourés par le produit d'étanchéité (25) dans une position de montage du capuchon d'étanchéité (18b) et s'appuient contre le côté frontal (27) de la bague de palier (3) externe jusqu'à une épaisseur d'un film d'étanchéité (30).

8. Butée de débrayage selon la revendication 1, dans laquelle un caoutchouc de silicone résistant aux températures élevées est prévu en tant que produit d'étanchéité (25).

9. Butée de débrayage selon la revendication 1, dans laquelle le produit d'étanchéité (25) utilisé est dimensionné de telle sorte qu'un excès ou une saillie par rapport aux surfaces planes s'étendant en particulier radialement se forme entre la bague de palier (3) et le capuchon d'étanchéité (18a à 18e) dans la région de l'interstice d'étanchéité (26).

10. Butée de débrayage selon la revendication 1, dans laquelle le moyen d'étanchéité, à savoir le produit d'étanchéité (25) à élasticité permanente, s'étend de manière au moins limitée jusqu'à une dimension d'interstice (39) qui est limitée radialement par la bague de palier (3) externe et la branche cylindrique (19) du capuchon d'étanchéité (18a à 18e).

11. Butée de débrayage selon la revendication 1, dont le capuchon d'étanchéité (18e) comprend sur le côté intérieur de la branche cylindrique (19) un revêtement (35) qui, lors d'un assemblage du capuchon d'étanchéité (18e) avec la bague de palier (3) externe, se détache au moins dans certaines régions et qui s'accumule dans une zone annulaire (36) limitée par le capuchon d'étanchéité (18e) et la bague de palier (3).

12. Butée de débrayage selon la revendication 11, dans laquelle la branche cylindrique (19) comprend sur le côté intérieur un revêtement (35) galvanique, par exemple FeZn ou FeZnNi.

13. Butée de débrayage selon la revendication 11, dans laquelle le capuchon d'étanchéité (18e) comporte sur le côté intérieur de la branche cylindrique (19) un revêtement (35) en plastique résistant aux températures élevées.

14. Procédé pour fermer hermétiquement une butée de débrayage (1) réalisée sous forme de palier à épaulement oblique, comportant une bague de palier (3) externe périphérique ainsi qu'une bague de palier (2) interne bloquée en rotation entre lesquelles sont disposés des corps de roulement (7) et, pour fermer hermétiquement un espace interne (13), la butée de débrayage (1) est munie de capuchons d'étanchéité (18a à 18e) qui sont, de manière fixée à une bague de palier (2, 3), guidés jusqu'à l'autre bague de palier (2, 3) associée en maintenant un interstice annulaire (16, 17), un produit d'étanchéité (25) introduit sous forme liquide dans le capuchon d'étanchéité (18a à 18e) étant prévu pour fermer hermétiquement un interstice d'étanchéité (26) entre la bague de palier (3) et le capuchon d'étanchéité (18a à 18e) fixé en rotation à la bague de palier (3) externe, le produit d'étanchéité (25) durcissable à élasticité permanente avant le montage étant pressé lors du montage et le montage du capuchon d'étanchéité (18a à 18e) s'effectuant de telle sorte qu'un film d'étanchéité (28, 30) se forme entre des ergots (29) ou des nervures (32), faisant saillie axialement, d'une branche radiale (22) du capuchon d'étanchéité (18b, 18d) et du côté frontal (27) de la bague de palier (3).

15. Procédé selon la revendication 15, dans lequel le montage tient compte d'un interstice fonctionnel (40) entre le capuchon d'étanchéité (18a à 18e) et un élément de fixation (41) relié à la bague de palier (2) bloquée en rotation et, à cet effet, le capuchon d'étanchéité (18a à 18e) peut être monté en butée au moyen d'un outil de montage (42).
